Europäisches Patentamt

**European Patent Office**

**Office européen des brevets**

(11) Publication number:

**0 025 295**

**A1**

(12) **EUROPEAN PATENT APPLICATION**

(21) Application number: **80302860.4**

(22) Date of filing: **19.08.80**

(51) Int. Cl.³: **H 01 H 3/16**
**F 16 H 51/02**

(30) Priority: **04.09.79 GB 7930670**

(43) Date of publication of application:
**18.03.81 Bulletin 81/11**

(84) Designated Contracting States:
**DE FR GB IT**

(71) Applicant: **LUCAS INDUSTRIES LIMITED**
**Great King Street**
**Birmingham, B19 2XF(GB)**

(72) Inventor: **Cryer, Edward**
**10 West Close Avenue Higham**
**Burnley Lancs.(GB)**

(74) Representative: **Carpenter, David et al,**
**MARKS & CLERK Alpha Tower ATV Centre**
**Birmingham B1 1TT(GB)**

(54) **Pushbutton mechanism operating assembly.**

(57) A push-rod (12) extends through a support (11, 16) and is longitudinally slidable relative to the support. A first stop means (11) defines a rest position of an operating component (13) secured to the push-rod. A drive collar (14) is engaged as an interference fit with the push-rod. A spring (15) acting between the push-rod and the support urges the push-rod (12) to said rest position. The spring (15) limits movement of the drive collar (14). A knob (18, 19) is slidably engaged with said drive collar (14) and abutment means (17, 22) on the knob and the drive collar limit movement of the knob relative to the collar in a direction opposite that in which the push-rod is urged by the spring (15). A second spring (23) acting between the support and the knob biasses the knob in the same direction as the push-rod (12) is biassed by the spring (15) and a member (24) on the support (11) limits movement of the knob (18, 19) relative to the support (11, 16).

This invention relates to an operating assembly for a pushbutton mechanism, particularly but not exclusively a pushbutton switch. A previously proposed pushbutton switch is incorporated in a lever operated switch assembly for mounting on the stationary part of the steering column of a road vehicle. The lever extends generally radially of the steering column in use from a housing of the switch assembly, and movement of the lever about an axis generally parallel to the steering column axis operates a first switch, for example a direction indicator switch, of the assembly. The pushbutton switch of the assembly has its switching mechanism within the housing and is operated by movement of a knob, carried at the free end of the lever, against a resilient bias longitudinally of the lever towards the housing. The knob is slidable on the lever and is coupled to a push-rod which extends through the lever to the switching mechanism. Thus movement of the knob is transmitted by the push-rod to the switching mechanism to operate the switching mechanism. In the previously proposed arrangement the knob is in screw threaded engagement with one end of the push-rod, the other end of the push-rod carrying a switching mechanism operating component including a molded synthetic resin body secured to the push-rod end by being molded therearound.

Among the problems encountered in the previously proposed arrangement are firstly the difficulty of setting the position of the knob in relation to the push-rod to ensure that adequate, but not excessive, movement of the push-rod and thus the operating component can occur within the permitted range of movement of the knob relative to the lever. Clearly excessive movement of the operating component can result in damage to the switching mechanism and/or the component, and insufficient movement of the component will result in failure of the switching mechanism to be operated. Setting has been achieved on a trial and error basis by rotating a cap of the knob, with which the push-rod is in screw threaded engagement, relative to the push-rod prior to securing the cap to the remainder of the knob. This is a skilled task and is time consuming. A second problem is that in the rest position of the operating component the component abuts the end of the lever remote from the knob. In this situation if the knob is not abutting an appropriate stop on the lever, as may well be the case owing to incorrect adjustment and/or manufacturing tolerances, then if the operator applies a pull force to the knob the loading applied through the push-rod can strip the molded block of the operating component from the end of the push-rod. It is an object of the present invention to provide a pushbutton mechanism operating assembly wherein the aforementioned problems are minimized.

A pushbutton mechanism operating assembly according to the invention includes a push-rod, a support through which the push-rod extends, the push-rod being longitudinally slidable relative to the support, an operating component secured to one end of the push-rod, first stop means defining a rest position of the operating component, and therefore the push-rod, relative to the support, a drive collar engaged as an interference fit with the push-rod adjacent its end remote from the operating component, a first resilient means acting between the push-rod and the support to urge the push-rod to said rest position, second stop means limiting movement of the drive collar in a direction opposite the direction in which the push-rod is urged by said first resilient means, a knob slidably engaged with said drive collar, first abutment means on the knob and the drive collar limiting movement of the knob relative to the collar in a direction opposite that in which the push-rod is urged by said first resilient means, second resilient means acting between the support and the knob to bias the knob in the same direction as the push-rod is biassed by said first resilient means, and second abutment means limiting movement of the knob.

relative to the support under the action of said second
resilient means.

When an operating assembly of the kind specified
in the preceding paragraph is in a rest condition, immediately after assembly, the operating component and the
push-rod will be in their rest position under the action
of the first resilient means and the first stop means.
The knob will also be in a rest position under the action
of the second resilient means and the second abutment
means. The first abutment means may not be operative.
In order to adjust the operating movement of the push-rod
and operating component in relation to the permitted
movement of the knob all that is necessary is to mount
the assembly in a jig which includes a stop member against
which the operating component will abut after being moved
relative to the support through the appropriate required
distance. The method of setting requires the knob to be
pushed against the action of the second resilient means
whereupon initially, if the first abutment means is not
operative the knob will slide relative to the drive collar
until the first abutment means becomes operative. Thereafter, the drive collar, the push-rod and the operating
component will be moved with the knob against the action
of the first and second resilient means until such time
that the operating component abuts the stop member of the
jig. Thereafter, continued movement of the knob against
the action of the first resilient means will move the
drive collar relative to the push-rod, sufficient force
being applied to overcome the interference fit between
the drive collar and the push-rod, until the second stop
means is operative to limit movement of the drive collar,
and thus the knob relative to the support. The assembly
is then set, and can be removed from the jig for assembly
into a pushbutton mechanism. It will be recognised
therefore that the setting operation is extremely simple
and can be performed without any skill whatsoever. Moreover, it will be recognised that if a pulling force is
applied to the knob the pulling force can never be transmitted to the push-rod since the first abutment means
between the knob and the drive collar is only operative
in the opposite direction. Thus a pulling force applied
to the knob can never result in the operating component
being stripped from the push-rod.

Preferably the first resilient means is a helical
compression spring and acts between the drive collar and
the support.

Desirably the second stop means is defined by the
helical compression spring, at a point in the compression
of the spring wherein the spring becomes solid.

Desirably the support / includes an elongate tube through
which the push-rod extends, and the knob is slidably
received on the exterior of the tube.

Preferably the knob is in two parts, a sleeve and a
cap, the sleeve being slidable on the support and the cap
being engageable with the sleeve as a snap fit and co-operating with the drive collar.

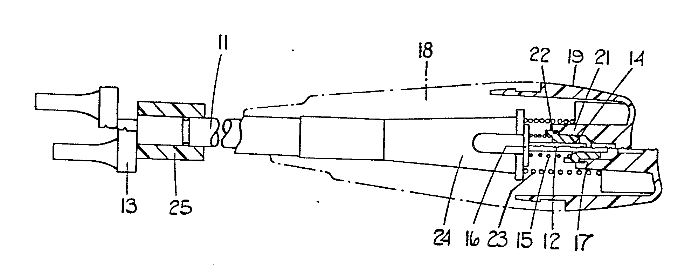

The accompanying drawing is a part sectional composite
view of a pushbutton switch operating assembly, showing
in the upper half of the figure the parts in an operated
condition, and in the lower half of the figure the parts
in their rest position.

Referring to the drawing, the assembly includes a
metal tube 11 through which extends a brass push-rod 12.
The push-rod 12 is freely slidable within the tube 11 and
at one end carries a molded synthetic resin block 13
forming part of a switching mechanism operating component.
The block 13 can abut one end of the tube 11. At its opposite end the push-rod 12 projects from the tube 11, and carries a molded synthetic resin drive collar 14. The drive collar 14 is engaged on the push-rod 12 as an interference fit, that is to say there is no mechanical connection such as a screw thread, or re-enterant formation, the collar being a tight fit on the cylindrical surface of the push-rod and remaining thereon by virtue of friction. As will become more apparent hereinafter the fit of the collar 14 on the push-rod 12 is of importance. A helical compression spring 15 acts between one end of the drive collar 14 and a washer 16 secured to the end of the tube 11. The spring 15 urges the collar 14, the push-rod 15 and the component 13 to a rest position relative to the tube 11, the rest position being defined by abutment of the block 13 with the end of the tube 11 remote from the washer 16. The spring 15 does not exert sufficient force on the drive collar 14 to move the drive collar 14 relative to the push-rod 12, nor to move the push-rod 12 relative to the block 13. The drive collar 14 is formed externally with a peripheral shoulder 17 parallel to the washer 16 and facing away from the washer 16.

A molded synthetic resin knob is slidably mounted on the tube 11, the knob including a sleeve 18 (shown in broken lines) and a cap 19 engageable with the sleeve 18 as a snap fit. The sleeve 18 is engaged with the outer surface of the tube 11 for rectilinear sliding movement thereon and the cap 19 closes the open end of the sleeve 18. The cap 19 is formed internally with an integral hollow spigot 21 within which the drive collar 14 and the end of the push-rod 12 are received as a sliding fit. The spigot 21 is formed internally with a shoulder 22 against which the shoulder 17 of the drive collar 14 can abut. A second helical compression spring 23 acts between a molded member 24 secured to the tube 11 within the sleeve 18 and the cap 19. The sleeve 18 is formed internally with an abutment surface which engages the member 24 under the action of the spring 23 to define a rest position of the knob 18, 19 relative to the tube 11.

The assembly is constructed in the following manner. The washer 16 and member 24 are secured to the tube 11, and the sleeve 18 of the knob is then threaded onto the tube 11 from the end thereof remote from the washer 16. A further molded component 25 is then engaged with the end of the tube 11 remote from the washer 16 to prevent removal of the sleeve 18 from the tube 11. The sleeve 18 is slidable at this stage relative to the tube 11 between limits defined by engagement of the sleeve 18 with the member 25 in one direction, and in the other direction by abutment of an internal surface of the sleeve 18 with part of the member 24. The push-rod 12 is then moved until the block 13 abuts the end of the tube 11, and at the spring 15 is then threaded over the projecting end of the push-rod 12. While holding the push-rod in its projecting position the drive collar 14 is then press-fitted onto the push-rod 12. The spring 23 is then positioned over the push-rod and the drive collar, and the cap 19 is assembled to the sleeve 18 with the drive collar 14 entering the spigot 21 of the cap. As mentioned previously the cap 19 is a snap fit with the sleeve 18. The attachment of the cap 19 to the sleeve 18 completes the assembly sequence, and the assembly is then ready for adjustment to ensure that within the range of movement of the knob 18, 19 relative to the tube 11 the block 13 will move through a distance appropriate to operate the switching mechanism with which the assembly is to be associated. Thus the assembly is engaged in a simple jig which grips the tube 11, and which includes a stop member against which the block 13 abuts after movement through a predetermined distance from its rest position. Initially of course after assembly, but before adjustment the parts will be in rest positions defined by engagement of the block 13 with the end of the tube 11, under the action of
the spring 15, and engagement of the internal abutment
surface of the sleeve 18 with the member 24 under the
action of the spring 23. After introduction of the assembly
into the jig the knob 18, 19 is pushed against the action
of the spring 23. Initial movement of the knob may not
result in movement of the push-rod 12, since in all probability there will, in the rest position of the component,
be a gap between the shoulder 22 of the spigot 21 and
the shoulder 17 of the drive collar 14. Thus initial
movement of the knob 18, 19 against the action of the
spring 23 will bring the shoulder 22 into abutment with
the shoulder 17, and thereafter the drive collar 14,
the push-rod 12, and the block 13 will move with the knob
18, 19 against the combined action of the springs 23, 15.
The push-rod 12, drive collar 14 and block 13 will move
until the block 13 abuts the stop member of the jig,
whereupon the block 13 and push-rod 12 will be incapable
of further movement. However, continued movement of the
knoo 18, 19 will result in movement of the drive collar
14 relative to the push-rod 12. Thus a significant amount
of force must be applied to the knob 18, 19 to move the
drive collar 14 relative to the push-rod 12, it being
recalled that the collar 14 is an interference fit on
the push-rod 12. The knob 18, 19 is moved, carrying the
collar 14 with it, until the spring 15 is fully collapsed,
and becomes a solid spacer between the washer 16 and the
drive collar 14. Thereafter no further movement of the
knob 18, 19 against the action of the spring 23 is possible.
Thus after assembly the movement of the knob 18, 19 towards
the member 25 is limited not by engagement of the sleeve
18 with the member 25, but by total collapse of the spring
15. This completes the setting of the assembly, and it
will be recognised that setting is, by virtue of the
construction incorporating the drive collar 14, an extremely
simple and rapid procedure. Indeed, the setting could
be performed automatically, by a machine which applies an axial loading to the cap 19, the maximum axial loading applied by the machine being calculated to overcome the effect of the interference fit between the drive collar 14 and the push-rod 12, but being insufficient to cause any damage to the assembly when the spring 15 is fully collapsed.

Upon removal of the assembly from the jig the parts returned to their rest configurations under the action of the springs 15, 23. Thus the push-rod 12, drive collar 14 and block 13 return to a rest postion defined by engagement of the block 13 with the end of the tube 11 under the action of the spring 15, and the knob 18, 19 returns to a rest position under the action of the spring 23, defined by engagement of the internal abutment of the sleeve 18 with the member 24. In the rest position of the knob and the push-rod 12 a gap between the shoulder 17 of the drive collar 14 and the shoulder 22 of the spigot 21 may be re-established. It will be recognised that force can only be transmitted from the knob to the push-rod by movement of the knob in a direction towards the member 25. Movement of the knob in the opposite direction does not transmit any force to the push-rod since the spigot 21 will slide relative to the collar 14. Thus there can be no possibility of a pull force applied to the knob damaging the connection between the block 13 and the push-rod 12.

As mentioned previously the drawing shows the components in two positions. The upper half of the drawing shows the component in an operated condition after setting, and the lower half of the drawing shows the parts in their rest positions.

The assembly illustrated in the drawing and described above is primarily intended for use in a switch assembly of a road vehicle. The member 25 couples the lever 18 to various switching mechanisms of the switch assembly, these switching mechanisms being operated by movement of the tube 11. The block 13 forms part of the operating component of a pushbutton switch, the switching mechanism of which is within the housing containing the other switching mechanisms of the switch assembly. The pushbutton switch is operated by moving the knob 18, 19 against the action of the springs 15, 23.

While the foregoing example is an operating assembly for a pushbutton switch, it is to be recognised that a similar principle can be applied to other pushbutton mechanism operating assemblies, for example certain mechanical components such as bistable mechanisms, changeover valves and the like can be operated mechanically by pushbutton arrangements, and similar operating assemblies to the one disclosed above, but of course modified in shape where necessary, could be utilized.

CLAIMS:

1.        A pushbutton mechanism operating assembly including a push-rod, a support through which the push-rod extends
for longitudinal sliding movement, an operating component
carried at one end of the push-rod and a knob at the other
end of the push-rod, characterised in that there is provided first stop means 11 defining a rest position of the
operating component 13, and therefore the push-rod 12,
relative to the support, a drive collar 14 engaged as an
interference fit with the push-rod 12 adjacent its end
remote from the operating component 13, a first resilient
means 15 acting between the push-rod 12 and the support
11, 16 to urge the push-rod 12 to said rest position, second
stop means 15 limiting movement of the drive collar 14 in
a direction opposite the direction in which the push-rod
12 is urged by said first resilient means 15, a knob 18, 19
slidably engaged with said drive collar 14, first abutment
means 17, 22 on the knob 18, 19 and drive collar 14 limiting
movement of the knob 18, 19 relative to the collar 14 in
a direction opposite that in which the push-rod 12 is urged
by said first resilient means 15, second resilient means 23
acting between the support 11, 16 and the knob 18, 19 to
bias the knob 18, 19 in the same direction as the push-rod
12 is biassed by said first resilient means 15, and second
abutment means 24 limiting movement of the knob 18, 19
relative to the support 11, 16 under the action of said
second resilient means 23.

2        An assembly as claimed in claim 1, characterised
in that the first resilient means 15 is a helical compression
spring 15 and acts between the drive collar 14 and the support
11, 16.

3.       An assembly as claimed in claim 2, characterised
in that the second stop means is defined by the helical
compression spring 15, at a point in the compression of the
spring 15 wherein the spring 15 becomes solid.

4.       An assembly as claimed in any one of claims 1
to 3 characterised in that the support 11, 16 includes an
elongate tube 11 through which the push-rod 12 extends, and
the knob 18, 19 is slidably received on the exterior of the
tube 11.

5.       An assembly as claimed in any one of the preceding claims characterised in that the knob 18, 19 is in two
parts, a sleeve 18 and a cap 19, the sleeve 18 being slidable
on the support 11, 16 and the cap 19 being engageable with
the sleeve 18 as a snap fit and co-operating with the drive
collar 14.

0025295

## DOCUMENTS CONSIDERED TO BE RELEVANT

| Category | Citation of document with indication, where appropriate, of relevant passages | Relevant to claim |
|---|---|---|
| | GR - A - 955 270 (K. MAECKER)<br>+ Page 3, lines 87 ff; fig. 5 +<br>-- | 1 |
| | US - A - 2 636 953 (J.W. HUNT)<br>+ Column 4, lines 45 ff; fig. 1 +<br>-- | 1 |
| | FR - A - 2 201 497 (R. RODE)<br>+ Page 3, lines 24-33; page 5, lines 15-24; page 6, lines 3-8; fig. 2 +<br>-- | 1 |
| | DE - A - 1 932 966 (SWF-SPEZIAL-FABRIK)<br>+ Page 5, lines 15-20 +<br>-- | 1 |
| | DE - A1 - 2 823 808 (LUCAS)<br>+ Page 13; fig. 2 +<br>---- | 4,5 |

**CLASSIFICATION OF THE APPLICATION (Int Cl 3)**

H 01 H 3/16
F 16 H 51/02

**TECHNICAL FIELDS SEARCHED (Int.Cl.3)**

H 01 H 3/00
H 01 H 13/00
H 01 H 25/00
F 16 H 35/00
F 16 H 51/00
G 05 G 1/00
H 03 J 1/00
H 03 J 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>VIENNA | Date of completion of the search<br>09-12-1980 | Examiner<br>HUBER | |

EPO Form 1503.1 06.78